# EUROPÄISCHE PATENTSCHRIFT

(11) **EP 3 257 592 B1**
(45) Veröffentlichungstag und Bekanntmachung des Hinweises auf die Patenterteilung: **05.09.2018**
(21) Anmeldenummer: 16174847.0
(22) Anmeldetag: 16.06.2016
(51) Int. Cl.: B06B 1/06, G01F 23/296, G10K 9/125

(54) **VERFAHREN ZUM BETREIBEN EINES VIBRATIONSSENSORS**
METHOD FOR OPERATING A VIBRATION SENSOR
PROCEDE DE FONCTIONNEMENT D'UN CAPTEUR DE VIBRATIONS

(43) Veröffentlichungstag der Anmeldung: 20.12.2017
(73) Patentinhaber: VEGA Grieshaber KG, 77709 Wolfach (DE)
(72) Erfinder: Allgaier, Volker, 77761 Haslach i. K. (DE); Fehrenbach, Dominik, 77716 Haslach (DE)
(74) Vertreter: Westphal, Mussgnug & Partner Patentanwälte mbB

(56) Entgegenhaltungen:
- EP-A1- 2 803 954
- DE-A1-102013 102 712

## Beschreibung

Die vorliegende Erfindung betrifft ein Verfahren zum Betreiben eines Vibrationssensors gemäß dem Oberbegriff des Patentanspruchs 1.
Aus dem Stand der Technik sind verschiedene Arten von Vibrationssensoren bekannt, wobei die vorliegende Erfindung von einem Vibrationssensor mit einer über einen piezoelektrischen Antrieb in Schwingung versetzbaren Membran, die in unbelastetem Zustand eine Ruhelage aufweist, ausgeht, wobei der Antrieb wenigstens einen ersten Teilantrieb umfasst, der derart mit der Membran gekoppelt ist, dass er bei Anregung auf diese drückt und wenigstens einen zweiten Teilantrieb umfasst, der derart mit der Membran gekoppelt ist, dass er bei Anregung an dieser zieht.
Ein derartiger Vibrationssensor ist beispielsweise aus der EP 2 803 954 A1 der Anmelderin bekannt und in Figur 3 dargestellt. DE 10 2013 102 712 A1 offenbart einen Vibrationssensor mit einem Gehäuse, einer Membran, einer Erregereinheit und einer Empfangseinheit. Zwischen der Erregereinheit und der Empfangseinheit ist ein erstes Einstellelement angeordnet. Die Erregereinheit stützt sich auf den Kopf eines Stehbolzens, der an der Membran angeordnet ist.

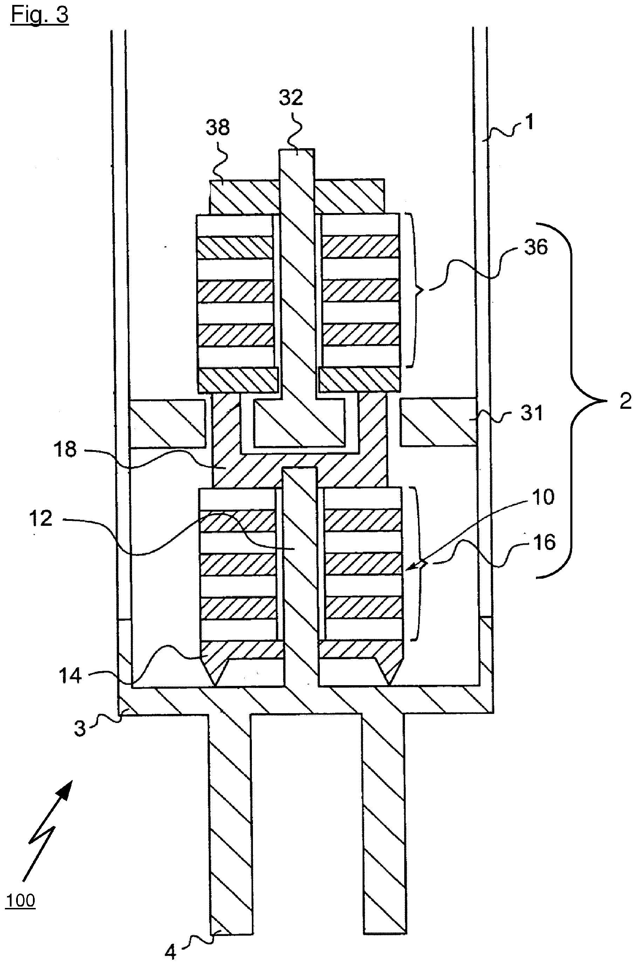

Figur 3 zeigt einen Vibrationssensor 100 mit einer durch einen Antrieb 2 zu einer Schwingung anregbaren Membran 3, an der ein mechanischer Schwinger 4 an einer dem Antrieb 2 gegenüberliegenden Seite der Membran 3 angeordnet ist. Der mechanische Schwinger 4 ist im vorliegenden Ausführungsbeispiel als ein sich orthogonal von der Ebene der Membran 3 wegerstreckendes in Längsrichtung des Vibrationssensors 100 angeordnetes Paar von Schwingstäben ausgebildet, das bei einer Schwingung der Membran 3 zu einer Schwingung angeregt wird.

Der Antrieb 2 ist bei dem dargestellten Vibrationssensor 100 in einem Gehäuse 1 angeordnet und im Wesentlichen aus einem ersten Teilantrieb 16, der bei einer Anregung über einen Zugbolzen 12 an der Membran 3 zieht sowie einem zweiten Teilantrieb 36, der bei einer Anregung über ein Zwischenelement 18 sowie den Zugbolzen 12 auf die Membran drückt, aufgebaut.

Das Zwischenelement 18 ist mit dem Zugbolzen 12 gekoppelt und wirkt für den ersten Teilantrieb 16 als Vorspannelement, das den Antrieb 16 über den Zugbolzen 12 mit der Membran 3 verspannt.

Der zweite Teilantrieb 36 ist ebenfalls an dem Zwischenelement 18 abgestützt und über einen an einem als Zwischenboden ausgebildetem Zugbolzen 32 und einem daran angeordneten Vorspannelement 38 mit dem Zwischenelement 18 verspannt.

Beide Antriebe, 16, 36 sind aus einer Mehrzahl von übereinander gestapelten und den Zug- beziehungsweise Druckbolzen 12, 32 umgreifenden Piezoelementen gebildet. Solche Antriebe 16, 36 werden auch als Piezostapelantriebe bezeichnet.

In der EP 2 803 954 A1 wird der gezeigte Aufbau verwendet, um bei prozessseitig auf die Membran 3 wirkenden Über- und Unterdrücken eine Funktion des Antriebs 2 sicherzustellen. Wirkt nämlich ein Überdruck auf die Membran 3, so biegt sich diese in Richtung des Antriebs 2 durch, wodurch der erste Teilantrieb 16 entlastet, das heißt weniger vorgespannt wird, und damit an Wirkungsgrad verliert. Dieser Effekt kann bis zur Funktionsunfähigkeit der ersten Teilantriebs 16 führen.

Durch die Durchbiegung der Membran 3 wird jedoch der Zugbolzen 12 nach oben gedrückt und über das Zwischenelement 18 ein erhöhter Druck auf den zweiten Teilantrieb 36, der an dem als Zwischenboden ausgebildeten Zwischenelement 31 verspannt ist, ausgeübt. Eine Funktion des zweiten Teilantriebs 36 wird also durch einen prozessseitigen Überdruck nicht beeinträchtigt, sodass durch die Funktion des zweiten Teilantriebs 36 eine Funktionsfähigkeit des Vibrationssensors 100 in diesem Fall sichergestellt ist.

Wirkt ein prozessseitiger Unterdruck auf die Membran 3, so weist diese eine konkave Durchbiegung auf, wodurch der zweite Teilantrieb 36 über den Zugbolzen 12 und das Zwischenelement 18 entlastet wird. Durch das Wirken eines Unterdruckes kann damit der zweite Teilantrieb 36 in seinem Wirkungsgrad beeinträchtigt werden.

Dadurch, dass aber das Zwischenelement 18 gleichzeitig den ersten Teilantrieb 16 gegen die Membran 3 vorspannt, wird bei Wirken eines Unterdruckes dieser zusätzlich vorgespannt und damit durch einen Unterdruck in seiner Funktion nicht beeinträchtigt. Bei Wirken eines prozessseitigen Unterdruckes bleibt damit in jedem Fall die Funktionsfähigkeit des ersten Teilantriebs 16 erhalten, sodass auch in diesem Fall der Vibrationssensor 100 weiter funktioniert.

Trotz der Sicherstellung der Funktionsfähigkeit des Vibrationssensors 100 bei Druckeinwirkung wird es an den aus dem Stand der Technik bekannten Vibrationssensoren 100 als nachteilig empfunden, dass diese weiterhin durch die Einwirkung des Drucks beeinflusst sind. Ferner wird der aus Figur 3 ersichtliche vergleichsweise komplexe Aufbau als nachteilig empfunden.

Es ist die Aufgabe der vorliegenden Erfindung, ein Verfahren zum Betrieb eines Vibrationssensors anzugeben, bei dem diese Druckbeeinflussung reduziert beziehungsweise gänzlich kompensiert ist. Diese Aufgabe wird durch ein Verfahren zum Betreiben eines Vibrationssensors mit den Merkmalen des Patentanspruchs 1 gelöst.

Ein erfindungsgemäßes Verfahren zum Betreiben eines Vibrationssensors mit einer über einen piezoelektrischen Antrieb in Schwingung versetzbaren Membran, die in unbelastetem Zustand eine Ruhelage aufweist, wobei der Antrieb wenigstens einen ersten Teilantrieb umfasst, der derart mit der Membran gekoppelt ist, dass er bei Anregung auf diese drückt, und wenigstens einen zweiten Teilantrieb umfasst, der derart mit der Membran gekoppelt ist, dass er bei Anregung an dieser zieht, wobei der erste Teilantrieb und der zweite Teilantrieb an gegenüberliegenden Seiten eines Zwischenstücks abgestützt sind und über einen mit der Membran fest verbundenen Antriebssitz auf die Membran wirken, wobei die beiden Teilantriebe gegenphasig mit einer Grundanregung angeregt werden, zeichnet sich dadurch aus, dass bei einem prozessseitig auf die Membran wirkenden Überdruck eine Anregung des ersten Teilantriebs relativ zur Grundanregung vergrößert und eine Anregung des zweiten Teilantriebs relativ zur Grundanregung verkleinert wird und dass bei einem prozessseitig auf die Membran wirkenden Unterdruck eine Anregung des ersten Teilantriebs relativ zu der Grundanregung verkleinert und des zweiten Teilantriebs relativ zu der Grundanregung vergrößert wird.

Dadurch, dass bei Einwirken eines Über- oder Unterdrucks die Anregung der beiden Teilantriebe vergrößert beziehungsweise verkleinert wird, wird eine einheitliche Schwingungsamplitude der Membran sichergestellt und auf diese Weise das mit dem Vibrationssensor erzielbare Messergebnis verbessert. Insbesondere kann auf diese Weise besonders gut eine Frequenzverschiebung durch Einwirken eines Füllmediums auf die Membran und/oder den mechanischen Schwinger des Vibrationssensors detektiert und in ein Ausgangssignal verarbeitet werden.

Dementsprechend wird bei Einwirken eines prozessseitige Über- oder Unterdrucks die Anregung des ersten und zweiten Teilantriebs jeweils derart vergrößert beziehungsweise verkleinert, dass eine symmetrische Auslenkung der Membran relativ zur Ruhelage eingestellt wird.

Ein auf Grund des Über- und Unterdrucks an dem piezoelektrischen Antrieb detektierbarer Spannungsoffset bei einer Ansteuerung der Teilantriebe wird damit durch eine angepasste Anregung kompensiert und kann als Maß für einen auf die Membran wirkenden Druck ausgegeben werden. Auf diese Weise kann zusätzlich zu einer verbesserten Grenzstandsdetektion eine Druckerfassung realisiert werden.

Die vorliegende Erfindung wird nachfolgend unter Bezugnahme auf die beigefügten Figuren eingehend erläutert. Es zeigen:
- Figur 1: ein Ausführungsbeispiel eines Vibrationssensors gemäß der vorliegenden Anmeldung
- Figuren 2a bis c: (a) einen Verlauf der Piezosignale und Druckbelastung
(b) bei Einwirken eines Überdrucks und
(c) bei Einwirken eines Überdrucks nach erfolgreicher Kompensation und
- Figur 3: einen Vibrationssensor gemäß dem Stand der Technik (schon behandelt).

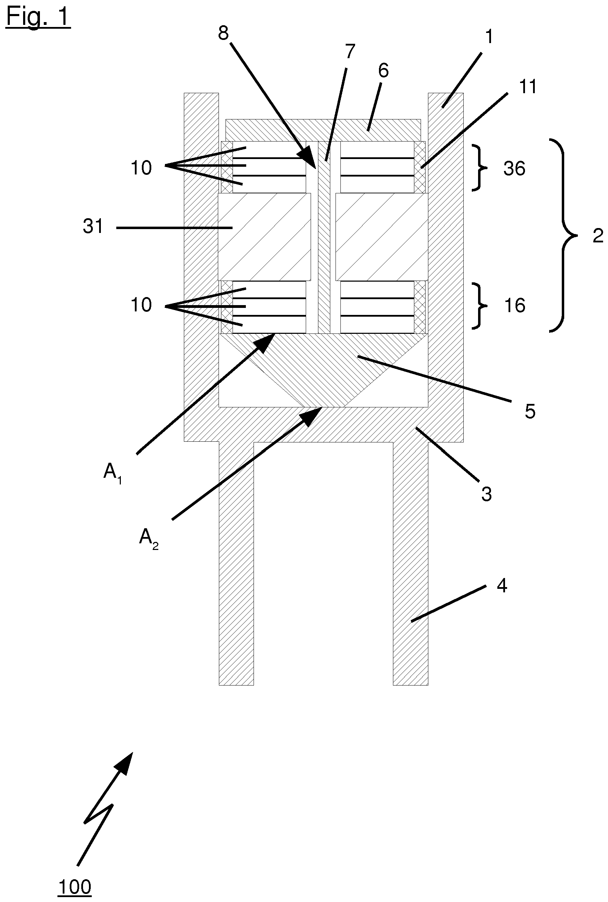

Figur 1 zeigt ein Ausführungsbeispiel eines Vibrationssensors 100 gemäß der vorliegenden Anmeldung.

Der Vibrationssensor 100 ist im Wesentlichen aus einer bodenseitig in einem Gehäuse 1 angeordneten Membran 3, die durch einen Antrieb 2 zu einer Schwingung orthogonal zur Membranebene anregbar ist sowie einem auf einer dem Antrieb 2 gegenüberliegenden Seite der Membran 3 angeordneten mechanischen Schwinger 4 aufgebaut. Der Antrieb 2 ist im vorliegenden Ausführungsbeispiel zweigeteilt ausgebildet, wobei ein erster Teilantrieb 16 auf einer der Membran 3 zugewandten Seite eines Zwischenstücks 31 und ein zweiter Teilantrieb 36 auf einer der Membran 3 abgewandten Seite des Zwischenstücks 31 angeordnet ist. Das Zwischenstück 31 ist im vorliegenden Ausführungsbeispiel in das Gehäuse 1 des Vibrationssensors 100 einschraubbar und derart ausgestaltet, dass es den ersten Teilantrieb 16 gegen einen Antriebssitz 5, auf dem dieser membranseitig aufliegt, verspannt. Der Membransitz 5 weist eine dem ersten Teilantrieb 16 zugewandte erste Fläche A₁ auf, die im Wesentlichen parallel zu der Membran 3 ausgerichtet und derart dimensioniert ist, dass der erste Teilantrieb 16 vollflächig auf dieser aufliegt. Eine der Membran 3 zugewandte zweite Fläche A₂ des Antriebssitzes 5 ist ebenfalls parallel zur Membran 3 ausgerichtet, weist jedoch relativ zur ersten Fläche A₁ eine reduzierte Fläche auf. Der Antriebssitz 5 ist mit der zweiten Fläche A₂ mechanisch mit der Membran 3 gekoppelt, beispielsweise mit dieser verklebt, verschweißt oder einstückig mit dieser ausgebildet. Dadurch, dass die zweite Fläche A₂ zentrisch mit der Membran 3 verbunden ist, werden auf den Antriebssitz 5 wirkende Kräfte zentrisch in die Membran 3 eingeleitet.

Dadurch, dass der erste Teilantrieb 16 durch das Zwischenstück 31 gegen den Antriebssitz 5 verspannt ist, drückt dieser bei einer Anregung des ersten Teilantriebs 16 gegen den Antriebssitz 5 und damit gegen die Membran 3, sodass diese in der Figur 1 gezeigten Darstellung nach unten, beziehungsweise vom Gehäuse 1 her gesehen, nach außen gedrückt wird.

Der erste Teilantrieb 16 und der zweite Teilantrieb 36 sind im vorliegenden Ausführungsbeispiel als sogenannte Piezostapelantriebe mit jeweils drei übereinander gestapelten, ringförmig ausgebildeten Piezoelementen 10 ausgebildet. Die Piezoelemente 10 sind durch eine als isolierende Hülse ausgebildete Zentriereinrichtung relativ zueinander ausgerichtet und gegenüber dem Gehäuse 1 elektrisch isoliert. Werden die Piezoelemente 10 des ersten Teilantriebs 16 beziehungsweise des zweiten Teilantriebs 36 angeregt, das heißt mit einer elektrischen Spannung beaufschlagt, so dehnen sie sich senkrecht zu ihrer Radialrichtung aus, sodass in der vorliegenden Ausgestaltung der Stapel an Piezoelementen 10 seine Höhe vergrößert.

Der zweite Teilantrieb 36 ist über einen Bolzen 7, der in einer zentrischen Öffnung 8 des Zwischenelements 31 verläuft und mit dem Antriebssitz 5 mechanisch verbunden, sowie mit Hilfe eines Spannelements 6 gegen das Zwischenstück 31 gespannt. Eine Anregung des zweiten Teilantriebs 36 führt damit durch die Abstützung des zweiten Teilantriebs 36 an dem Zwischenstück 31 dazu, dass über das Spannelement 6 sowie dem Bolzen 7 ein Zug auf den Antriebssitz 5 und damit die Membran 3 ausgeübt wird.

Der Vibrationssensor 100 gemäß dem in Figur 1 dargestellten Ausführungsbeispiel ist damit derart aufgebaut, dass die Membran 3 über den Antriebssitz 5 sowie die auf diesen wirkenden Teilantriebe 16, 36 sowohl in Zug- als auch in Druckrichtung aktiv durch die Antriebe 16, 36 bewegt wird. Dies hat den Vorteil, dass eine Rückstellung der Membran in der Ruhelage jeweils ebenfalls aktiv erfolgt und nicht von der Elastizität und insbesondere von auf die Membran wirkenden Über- oder Unterdrücken abhängig ist.

Im vorliegenden Ausführungsbeispiel befindet sich die Membran 3 in einem druckunbelasteten Zustand in einer Ruhelage Lo, von der ausgehend sie symmetrisch in zwei Auslenkungspositionen beiderseits der Ruhelage L₀ durch die beiden Teilantriebe 16, 36 aktiv ausgelenkt wird.

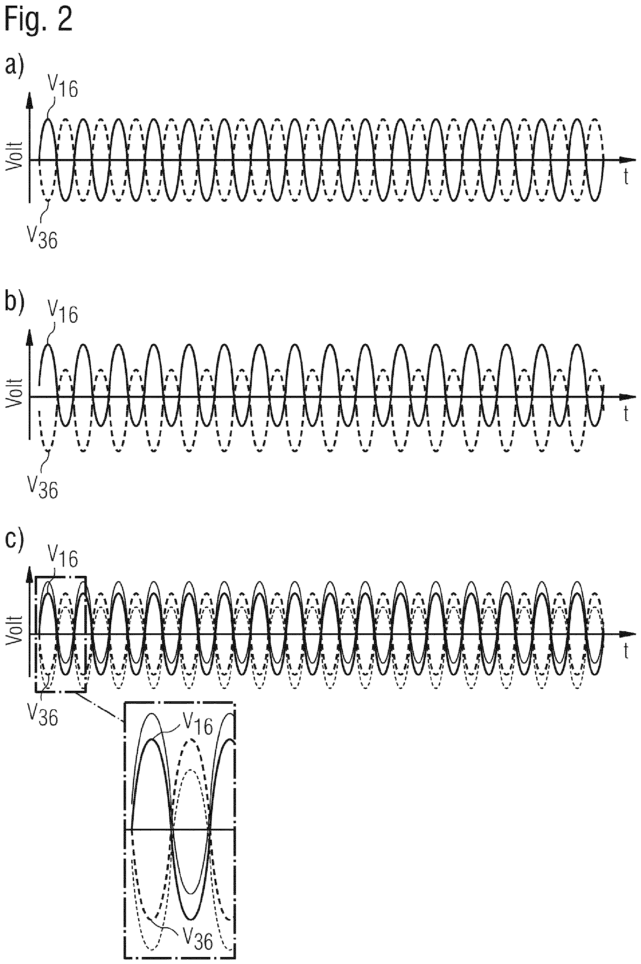

Eine solche Auslenkung der Membran 3 in druckunbelastetem Zustand beziehungsweise die bei solchen Auslenkungen an den Piezoelementen 10 anliegenden Spannungen einerseits bei den Piezoelementen 10 des ersten Teilantriebs 16 und andererseits bei den Piezoelementen 10 des zweiten Teilantriebs 36 ist in Figur 2a dargestellt. Mit V₁₆ ist dabei die an den Piezoelementen 10 des ersten Teilantriebs 16 anliegende Spannung und mit V₃₆ die an den Piezoelementen 10 des zweiten Teilantriebs 36 anliegende Spannung gekennzeichnet. Wie aus Figur 2a ersichtlich, sind die beiden Teilantriebe 16, 36 symmetrisch erregt und werden gegenphasig angesteuert.

In Figur 2b ist eine Situation dargestellt, bei der ein Überdruck auf die Membran 3 einwirkt, das heißt der erste Teilantrieb zusätzlich druckbelastet und der zweite Teilantrieb 36 durch den einwirkenden Druck entlastet wird. In den in Figur 2b dargestellten Spannungsverläufen ist dies durch einen positiven Spannungsoffset des Signals V₁₆ sowie eines negativen Spannungsoffsets des Signals V₃₆ zu erkennen. In dieser Situation wird die Membran 3 nicht mehr symmetrisch zur Ruhelage L₀ ausgelenkt. Durch eine geeignete Beschaltung der Teilantriebe 16, 36 ist es jedoch möglich, die durch die Druckeinwirkung hervorgerufenen Spannungsoffsets zu kompensieren und die Membran wieder in eine symmetrische Auslenkung relativ zur Ruhelage L₀ zu versetzen. Diese kompensierte Situation ist in Figur 2c dargestellt.

Durch die Kompensation der druckbedingt auftretenden Spannungsdifferenzen wird eine symmetrische Auslenkung der Membran 3 in beide Richtungen der relativ zur Ruhelage L₀ erreicht, sodass eine verbesserte Detektion einer nunmehr bei Bedeckung des mechanischen Schwingers 4 mit Füllgut auftretenden Frequenzänderung erfolgen kann. Eine Amplitudenänderung erfolgt auf Grund der Bedeckung des mechanischen Schwingers 4 mit Füllgut nicht, da diese durch die Kompensation der Spannungsoffsets automatisch ausgeglichen wird.

### Bezugszeichenliste

- 1: Gehäuse
- 2: Antrieb
- 3: Membran
- 4: mechanische Schwingungen
- 5: Antriebssitz
- 6: Spannelement
- 7: Bolzen
- 8: Öffnung

- 10: Piezoelement
- 11: Hülse
- 12: Zugbolzen
- 14: Druckstück
- 16: erster Teilantrieb
- 18: Zwischenelement

- 31: Zwischenstück
- 32: Druckbolzen
- 36: zweiter Teilantrieb
- 38: zweites Vorspannelement

- 100: Vibrationssensor

- A₁: erste Fläche
- A₂: zweite Fläche

- L₀: Ruhelage

## Patentansprüche

1. Verfahren zum Betreiben eines Vibrationssensors (100) mit einer über einen piezoelektrischen Antrieb (2) in Schwingung versetzbaren Membran (3), die in unbelastetem Zustand eine Ruhelage (L₀) aufweist, wobei der Antrieb (2) wenigstens einen ersten Teilantrieb (16) umfasst, der derart mit der Membran (3) gekoppelt ist, dass er bei Anregung auf diese drückt und wenigstens einen zweiten Teilantrieb (36) umfasst, der derart mit der Membran (3) gekoppelt ist, dass er bei Anregung an dieser zieht, wobei der erste Teilantrieb (16) und der zweite Teilantrieb (36) an gegenüberliegenden Seiten eines Zwischenstücks (31) abgestützt sind und über einen mit der Membran (3) fest verbundenen Antriebssitz (5) auf die Membran (3) wirken, wobei die beiden Teilantriebe gegenphasig mit einer Grundanregung angeregt werden,
**dadurch gekennzeichnet, dass** bei einem prozessseitig auf die Membran (3) wirkenden Überdruck eine Anregung des ersten Teilantriebs (16) relativ zur Grundanregung vergrößert und eine Anregung des zweiten Teilantriebs (36) relativ zu der Grundanregung verkleinert wird, und
bei einem prozessseitig auf die Membran (3) wirkenden Unterdruck eine Anregung des ersten Teilantriebs (16) relativ zur Grundanregung verkleinert und des zweiten Teilantriebs (36) relativ zu der Grundanregung vergrößert wird.

2. Verfahren gemäß Anspruch 1,
**dadurch gekennzeichnet, dass**
bei Wirken eines prozessseitigen Über- oder Unterdrucks die Anregung des ersten (16) oder zweiten Teilantriebs (36) jeweils derart vergrößert wird, dass eine symmetrisehe Auslenkung der Membran (3) relativ zur Ruhelage (L₀) eingestellt wird.

3. Verfahren gemäß einem der Ansprüche 1 oder 2,
**dadurch gekennzeichnet, dass**
ein aufgrund des Über- oder Unterdrucks an dem piezoelektrischen Antrieb detektierbarer Spannungsoffset bei einer Ansteuerung der Teilantriebe (16, 36) kompensiert wird.

4. Verfahren gemäß Anspruch 3,
**dadurch gekennzeichnet, dass**
der Spannungsoffset als Maß für einen auf die Membran (3) wirkenden Druck ausgegeben wird.

## Claims

1. Method for operating a vibration sensor (100) having a membrane (3) which can be set in vibration by means of a piezoelectric drive (2) and which has a rest position (L₀) in the unloaded state, wherein the drive (2) comprises a first partial drive (16), which is coupled to the membrane (3) in such a way that when excited it presses against the membrane, and a second partial drive (36), which is coupled to the membrane (3) in such a way that when excited it pulls on the membrane, wherein the first partial drive (16) and the second partial drive (36) are supported on opposite sides of an intermediate piece (31) and act on the membrane (3) by means of a drive seat (5) fixedly connected to the membrane (3), wherein the two partial drives are excited in phase opposition with a basic excitation,
**characterised in that** in the event of a positive pressure acting on the membrane (3) on the process side an excitation of the first partial drive (16) is increased relative to the basic excitation and an excitation of the second partial drive (36) is decreased relative to the basic excitation, and
in the event of a negative pressure acting on the membrane (3) on the process side an excitation of the first partial drive (16) is decreased relative to the basic excitation and of the second partial drive (36) relative to the basic excitation is increased.

2. Method according to claim 1, **characterised in that** in the event of a positive or negative pressure acting on the process side excitation of the first (16) or second partial drive (36) is in each case increased in such a way that a symmetrical deflection of the membrane (3) relative to the rest position (L₀) is set.

3. Method according to one of claims 1 or 2, **characterised in that** a voltage offset, which is detectable due to the positive or negative pressure on the piezoelectric drive during activation of the partial drives (16, 36), is compensated.

4. Method according to claim 3, **characterised in that** the voltage offset is output as a dimension for a pressure acting on the membrane (3).

## Revendications

1. Procédé permettant de faire fonctionner un capteur de vibrations (100) comportant une membrane (3) pouvant être mise en vibration par l'intermédiaire d'un entraînement piézoélectrique (2), et qui a, à l'état non chargé une position de repos (L₀), l'entraînement (2) comprenant au moins un premier entraînement partiel (16) qui est couplé à la membrane (3) de façon à la pousser en cas d'excitation, et au moins un second entraînement partiel (36) qui est couplé à la membrane (3) de façon à la tirer en cas d'excitation, le premier entraînement partiel (16) et le second entraînement partiel (36) s'appuyant sur des côtés opposés d'une pièce intermédiaire (31) et agissant sur la membrane (3) par l'intermédiaire d'un siège d'entraînement (5) relié solidairement à celle-ci, les deux entraînements partiels étant excités en opposition de phase avec une excitation de base,
**caractérisé en ce qu'**
en présence d'une surpression agissant côté processus sur la membrane (3), une excitation du premier entraînement partiel (16) est augmentée par rapport à l'excitation de base, et une excitation du second entraînement partiel (36) est diminuée par rapport à l'excitation de base, et
en présence d'une dépression agissant côté processus sur la membrane (3), une excitation du premier entraînement partiel (16) est diminuée par rapport à l'excitation de base et l'excitation du second entraînement partiel (36) est augmentée par rapport à l'excitation de base.

2. Procédé conforme à la revendication 1,
**caractérisé en ce qu'**
en cas d'action d'une surpression ou d'une dépression côté processus, l'excitation du premier entraînement partiel (16) ou du second entraînement partiel (36) est respectivement augmentée de sorte qu'une déviation symétrique de la membrane (3) par rapport à la position de repos (L₀) s'établisse.

3. Procédé conforme à l'une des revendications 1 ou 2,
**caractérisé en ce qu'**
un décalage de tension pouvant être détecté en raison d'une surpression ou d'une dépression sur l'entraînement piézoélectrique est compensé par une commande des entraînements partiels (16, 36).

4. Procédé conforme à la revendication 3,
**caractérisé en ce que**
le décalage de tension est délivré en tant que mesure de la pression agissant sur la membrane (3).
